(19) Europäisches Patentamt
European Patent Office
Office européen des brevets

(11) **EP 1 436 641 B1**

(12) **FASCICULE DE BREVET EUROPEEN**

(45) Date de publication et mention de la délivrance du brevet:
**06.08.2008   Bulletin 2008/32**

(21) Numéro de dépôt: **02785548.5**

(22) Date de dépôt: **15.10.2002**

(51) Int Cl.:
***G01S 13/76*** *(2006.01)*

(86) Numéro de dépôt international:
**PCT/FR2002/003522**

(87) Numéro de publication internationale:
**WO 2003/034091 (24.04.2003 Gazette 2003/17)**

(54) **PROCEDE ET DISPOSITIF DE POURSUITE D'UN SIGNAL DE TRANSPONDEUR EN PRESENCE D'UNE MODULATION DE FREQUENCE PARASITE DU PILOTE DE TRANSPOSITION**

VERFAHREN UND VORRICHTUNG UM EINEN TRANSPONDER ZU VERFOLGEN BEI EINER PARASITÄREN FREQUENZMODULATION DES LOKALOSZILLATORS IM MISCHER

METHOD AND DEVICE FOR TRACKING A TRANSPONDER SIGNAL IN THE PRESENCE OF AN INTERFERENCE FREQUENCY MODULATION OF THE TRANSPOSITION PILOT

(84) Etats contractants désignés:
**DE FR GB IT SE**

(30) Priorité:   **17.10.2001   FR 0113381**

(43) Date de publication de la demande:
**14.07.2004   Bulletin 2004/29**

(73) Titulaire: **Thales**
**75008 Paris (FR)**

(72) Inventeurs:
• **CLAVEL, Yannick,**
  **c/o Thales Intellectual Property**
  **94117 Arcueil Cedex (FR)**
• **RENARD, Alain,**
  **c/o Thales Intellectual Property**
  **94117 Arcueil Cedex (FR)**
• **GUILLARD, Patrice,c/o Thales Intellectual Property**
  **94117 Arcueil Cedex (FR)**

(74) Mandataire: **Beylot, Jacques**
**Marks & Clerk France**
**31-33 Avenue Aristide Briand**
**94117 Arcueil Cédex (FR)**

(56) Documents cités:
**FR-A- 2 683 326            FR-A- 2 707 015**

**Description**

La présente invention est relative à l'exploitation du signal d'un transpondeur à transposition de fréquence réémettant à faible puissance un signal incorporant un pilote de transposition, dans le cas où le pilote de transposition est reçu avec un rapport signal sur bruit insuffisant pour permettre de suivre, en temps réel, ses variations de fréquence.

Les transpondeurs sont souvent utilisés dans des environnements difficiles où l'exploitation sur place d'un signal se révèle nettement plus onéreuse qu'une exploitation à distance. Un exemple de situation où l'utilisation de transpondeurs est intéressante, est celui du suivi de trajectoire de mobiles à usage unique tels que des missiles ou des projectiles d'artillerie au moyen d'un système de positionnement par satellites.

Lorsque les mesures de position ne sont pas utilisées au niveau du projectile ou du missile mais au niveau d'un centre de contrôle, l'exploitation des signaux des satellites de positionnement reçus par le projectile ou le missile peut être reportée au centre de contrôle à condition que le missile ou le projectile les lui répercute. L'avantage attendu d'un tel report est une simplification de l'électronique embarquée qui est coûteuse car à usage unique et soumise à des contraintes particulièrement sévères de consommation électrique, d'encombrement, de poids, d'environnement, notamment de résistance aux chocs et aux accélérations.

On a donc proposé très tôt, en vue de simplifier et d'abaisser le coût du repérage à distance d'un mobile coopératif au moyen d'un système de positionnement par satellites, de placer dans le mobile un transpondeur relayant les signaux des satellites du système de positionnement reçus à bord du mobile en direction d'une station de contrôle chargée de les exploiter.

Dans cette utilisation, le transpondeur doit déplacer en fréquence les signaux des satellites du système de positionnement pour que la station de contrôle puisse distinguer les signaux directement reçus des satellites du système de positionnement de ceux relayés par le mobile. Il utilise pour ce faire une porteuse de transposition qui est engendrée localement à bord du mobile et qui doit être connue avec une grande précision de la station de contrôle pour qu'elle puisse exploiter les effets doppler affectant les porteuses émises à l'origine par les satellites de positionnement pour des mesures de vitesse du mobile.

Cette porteuse de transposition est engendrée dans le transpondeur au moyen d'une horloge locale qui doit être adaptée aux contraintes d'environnement imposées au transpondeur tout en étant d'un moindre coût puisque le transpondeur doit se révéler moins onéreux que le récepteur de positionnement auquel il est substitué. Pour réaliser cette horloge locale, on a souvent recours à des montages à quartz mais, sauf à être d'un coût prohibitif, les quartz utilisés ont une fréquence centrale d'oscillation affectée d'une imprécision trop grande pour être compatible avec l'exploitation recherchée des signaux transposés des satellites du système de positionnement.

Pour pallier les conséquences de cette imprécision sur l'exploitation des signaux transposés des satellites du système de positionnement, il est connu d'incorporer un pilote de transposition au signal réémis par un transpondeur. La réception de ce pilote de transposition engendré à partir de l'horloge locale du transpondeur, permet à la station de contrôle d'avoir connaissance de la fréquence effective de l'horloge locale du transpondeur pour en tenir compte dans l'exploitation ultérieure des signaux du transpondeur.

Ceci est notamment connu de la demande de brevet FR2815792 mise à la disposition du public le 24.04.02 mais à une date postérieure à la priorité de la présente demande.

Le pilote de transposition reçu à la station de contrôle est habituellement exploité à l'aide d'une boucle de poursuite en fréquence et en phase. Cependant, la faible puissance d'émission autorisée par l'énergie électrique disponible à bord de certains projectiles tels que des obus dont les trajectoires sont surveillées au moyen d'un système de positionnement par satellites, fait qu'il est reçu à la station de tir ou de guidage avec un rapport signal à bruit très faible ne permettant une récupération précise de sa fréquence par la boucle de poursuite en fréquence et en phase qu'au bout de plusieurs secondes. Ce pilote n'est donc réellement utile que lors de la préparation du tir, pour connaître l'erreur statique du quartz mais il ne permet pas, faute d'un rapport signal à bruit suffisant, de connaître l'erreur dynamique du quartz, c'est-à-dire ses fluctuations de fréquence provoquées par des contraintes mécaniques périodiques, dues à la rotation de l'obus sur lui-même et à son balourd inévitable. Or ces fluctuations de fréquence sont préjudiciables. Elles provoquent une modulation de fréquence parasite à faible indice de modulation, du signal réémis par le transpondeur entraînant une migration d'une partie de la puissance réémise par le transpondeur, de la raie centrale de la porteuse de transmission vers des raies latérales. Cette migration qui peut, dans la pratique, dépasser les 3 dB, se traduit, en réception du signal du transpondeur, par une dégradation apparente du même ordre du rapport signal sur bruit.

Actuellement, on ne connaît pas de solution à cette dégradation apparente en réception du rapport signal à bruit d'un transpondeur à transposition de fréquence et pilote de transposition, si ce n'est une augmentation de la puissance d'émission du pilote de transposition, solution qui ne peut pas toujours être envisagée car elle augmente la consommation d'énergie électrique à bord du mobile.

La présente invention a pour but de lutter contre la dégradation apparente en réception du rapport signal à bruit d'un transpondeur à transposition de fréquence et pilote de transposition, dont le signal est affecté d'une modulation de fréquence parasite due à des fluctuations périodiques de la fréquence du pilote de transposition, sans pour autant procéder à une augmentation de la puissance d'émission du pilote de transposition.

Pour ce faire, on propose de récupérer en réception, l'énergie du signal du transpondeur dispersée dans les raies latérales dues à la modulation de fréquence parasite en soumettant la porteuse locale, qui est utilisée en réception pour la démodulation du signal du transpondeur et dont la fréquence centrale est récupérée à partir de celle du pilote de transposition capturée en réception, à une modulation de fréquence auxiliaire ayant un indice de modulation et une fréquence de modulation correspondant à ceux de la modulation de fréquence parasite affectant la porteuse de transposition utilisée par le transpondeur, cet indice de modulation et cette fréquence de modulation étant déduits de ceux mesurés sur le pilote de transposition reçu.

Elle a pour objet un procédé de poursuite, en réception, du signal d'un transpondeur à transposition de fréquence et à signal incorporant un pilote de transposition lié en fréquence et en phase, par une relation de dépendance, à la porteuse de transposition qu'il utilise, lorsque la dite porteuse de transposition est sujette non seulement à un écart statique par rapport à sa fréquence théorique mais aussi à des fluctuations dynamiques assimilables à une modulation de fréquence. Ce procédé est remarquable en ce qu'il consiste à :

- mesurer en réception, la fréquence, la phase et l'énergie de la raie centrale du spectre de modulation du pilote de transposition,
- mesurer en réception, la fréquence, la phase et l'énergie de la première raie latérale du spectre de modulation du pilote de transposition,
- déduire la fréquence et la phase du signal modulant, des différences constatées entre les fréquences et les phases mesurées entre la raie centrale et la première raie latérale du pilote de transposition reçu,
- déduire l'indice de modulation de la modulation parasite de fréquence affectant le pilote de transposition reçu, du rapport entre les énergies de sa raie centrale et de sa première raie latérale ,
- engendrer un premier signal ayant la fréquence et la phase du signal modulant obtenues au cours d'une étape précédente, et une amplitude correspondant à l'indice de modulation obtenu au cours d'une étape précédente,
- déduire du premier signal obtenu un deuxième signal, par application de la relation de dépendance liant en fréquence et en phase le pilote de transposition à la porteuse de transposition,
- engendrer une porteuse locale de démodulation modulée en fréquence par le deuxième signal obtenu, et
- utiliser la porteuse locale modulée en fréquence ainsi obtenue pour la démodulation du signal du transpondeur.

L'invention a également pour objet un dispositif pour la mise en oeuvre du procédé précédent comportant :

- une première boucle de poursuite, en fréquence et en phase, de la raie centrale du spectre de modulation du pilote de transposition du transpondeur opérant sur le pilote de transposition reçu, isolant ladite raie centrale et délivrant l'erreur statique en fréquence et en phase de la raie centrale par rapport aux valeurs théoriques
- un premier circuit auxiliaire de mesure d'énergie opérant sur la raie centrale capturée par la première boucle de poursuite,
- une deuxième boucle de poursuite, en fréquence et en phase, de la première raie latérale du spectre de modulation du pilote de transposition opérant sur le pilote de transposition reçu, isolant ladite première raie latérale et délivrant la fréquence et la phase du signal modulant,
- un deuxième circuit auxiliaire de mesure d'énergie opérant sur la première raie latérale capturée par la deuxième boucle de poursuite,
- un circuit de calcul de l'indice de modulation opérant à partir des signaux fournis par les circuits auxiliaires de mesures d'énergies,
- un générateur de signal d'excursion de fréquence comportant un oscillateur à phase et fréquence réglables synchronisé sur la phase et la fréquence du signal modulant délivrées par la deuxième boucle de poursuite et un amplificateur à gain réglable contrôlé par le circuit de calcul de l'indice de modulation et opérant sur le signal délivré par l'oscillateur, et
- un démodulateur à boucle de récupération de porteuse aidé par la première boucle de poursuite, et par le générateur d'excursion de fréquence.

Avantageusement, la deuxième boucle de poursuite est aidée par la première boucle de poursuite.

Avantageusement, le circuit de calcul d'indice de modulation comporte des moyens diviseurs divisant la valeur d'énergie fournie par le circuit auxiliaire de mesure d'énergie de la première raie latérale par celle fournie par le circuit auxiliaire de mesure d'énergie de la raie centrale et des moyens d'adressage utilisant le résultat obtenu pour adresser une table renfermant une loi de variation de l'indice de modulation en fonction du rapport d'énergie existant entre la première raie latérale de modulation et la raie centrale d'un spectre de modulation de fréquence et en tirer la valeur de l'indice de modulation de la modulation parasite de fréquence affectant le pilote de transposition reçu

Avantageusement, un dispositif de suppression de raie centrale est interposé devant l'entrée de la deuxième boucle de poursuite.

Avantageusement, le dispositif de suppression de raie centrale interposé devant l'entrée de la deuxième boucle de poursuite est un filtre à encoche arrêtant la bande de fréquence dans laquelle la raie centrale est susceptible de se trouver.

Avantageusement, le dispositif de suppression de raie centrale interposé devant l'entrée de la deuxième boucle de poursuite comporte un circuit soustracteur intercalé en entrée de la deuxième boucle de poursuite et un synthétiseur de signal fournissant le signal soustrait, pourvu d'un oscillateur à phase et fréquence réglables synchronisé sur la phase et la fréquence de la raie centrale du pilote de transposition délivrées par la première boucle de poursuite et d'un amplificateur à gain réglable contrôlé par le circuit auxiliaire de mesure d'énergie opérant sur la raie isolée par la première boucle de poursuite.

D'autres caractéristiques et avantages de l'invention ressortiront de la description ci-après, d'un mode de réalisation donné à titre d'exemple. Cette description sera faite en regard du dessin dans lequel :

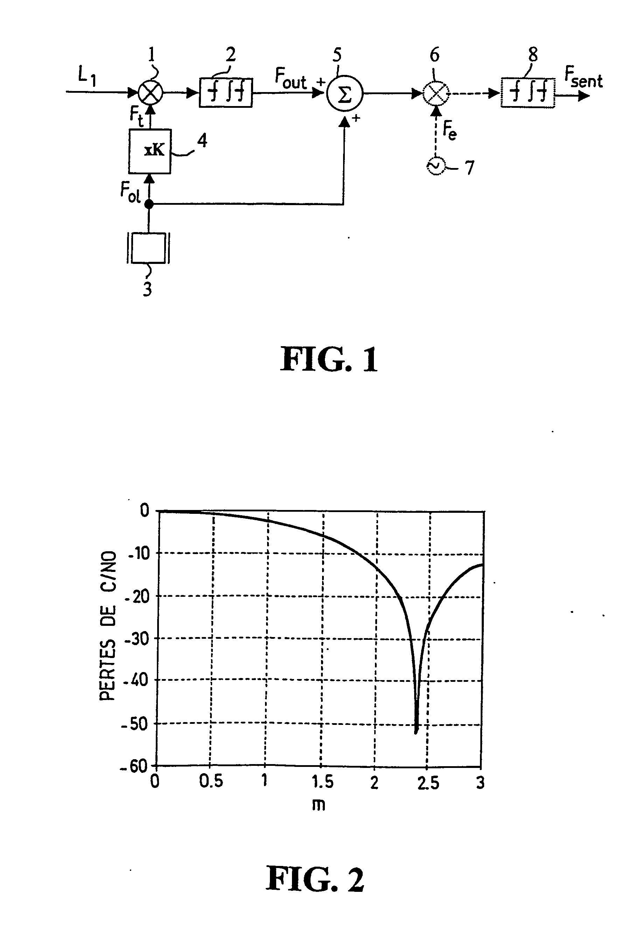

- une figure 1 est un schéma simplifié d'un exemple de partie émission que l'on peut trouver dans un transpondeur à transposition de fréquence incorporant dans son signal un pilote de transposition,
- une figure 2 est un diagramme illustrant, en fonction de l'indice de modulation d'une modulation de fréquence parasite de la porteuse de transposition du transpondeur, la perte apparente de puissance constatée en réception sur le signal d'un transpondeur si l'on ne tient pas compte de cette modulation parasite de fréquence lors de la démodulation du signal du transpondeur, et

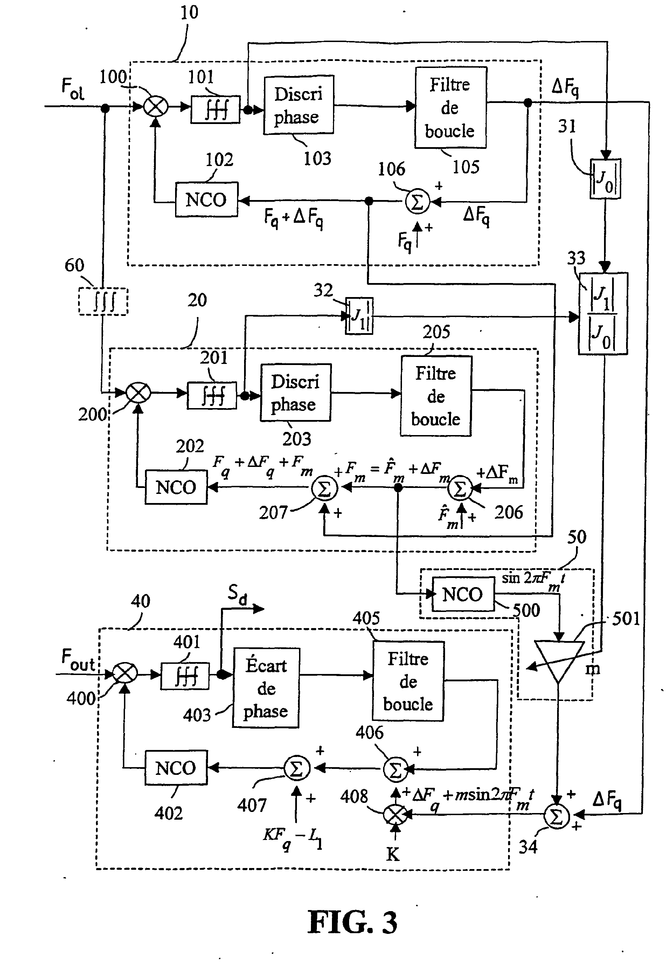

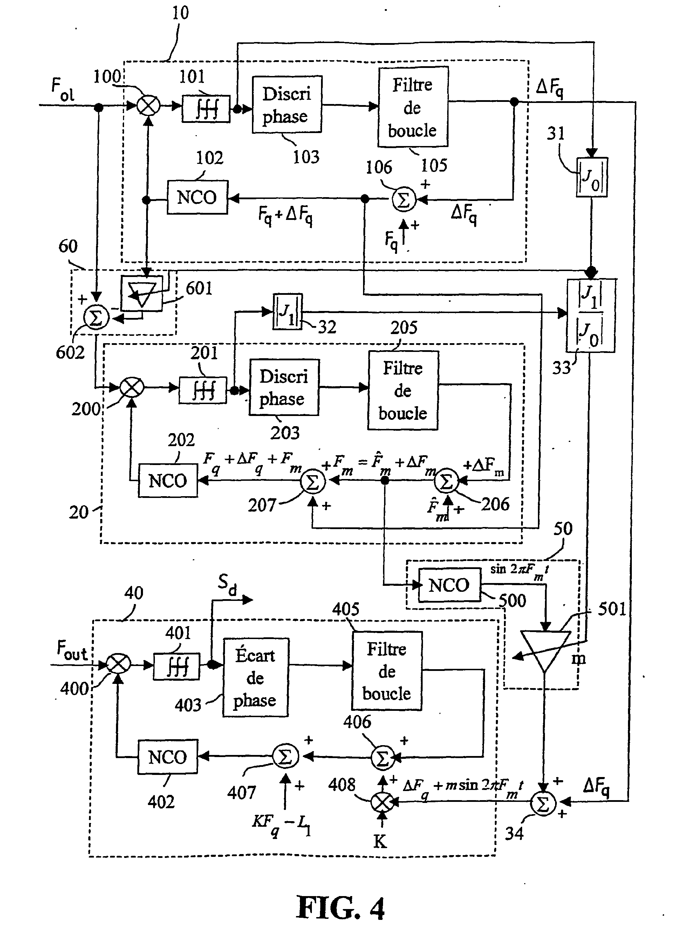

- les figures 3 et 4 sont des schémas de dispositifs conformes à l'invention, assurant la poursuite d'un signal de transpondeur à transposition de fréquence incorporant dans son signal un pilote de transposition, en présence d'une modulation parasite de fréquence de la porteuse de transposition du transpondeur.

Le schéma illustré à la figure 1 donne un exemple d'architecture pour la partie émission d'un transpondeur à transposition de fréquence et incorporation d'un pilote de transposition dans son signal d'émission.

Le signal reçu dans une bande de fréquence centrée sur une fréquence $L_1$ est transposé une première fois dans une bande de fréquence centrée sur une fréquence $F_{out}$ au moyen d'un multiplieur 1 qui le multiplie avec une porteuse locale de transposition à la fréquence $F_t$, et d'un filtre de bande 2 qui sélectionne la bande latérale inférieure parmi les deux bandes latérales obtenues en sortie du multiplieur 1. Cette première transposition est supposée, pour fixer les idées, être de type infradyne, c'est-à-dire faite avec une porteuse de transposition de fréquence $F_t$ supérieure à la fréquence centrale $L_1$ du signal reçu. La porteuse locale de transposition de fréquence $F_t$ est constituée d'une sur-harmonique d'un signal d'horloge locale à une fréquence $F_{ol}$. Elle est engendrée à partir du signal d'horloge locale de fréquence $F_{ol}$ fourni par une horloge locale 3 à quartz au moyen d'un multiplieur de fréquence 4 opérant sur le signal de l'horloge locale 3 dans le rapport K. Cette première transposition permet d'obtenir un signal dans une bande centrée sur la fréquence $F_{out}$ :

$$F_{out} = K.F_{ol} - L_1$$

Le pilote de transposition est constitué du signal de l'horloge locale 3 lui-même, à la fréquence $F_{ol}$. Il est ajouté au signal transposé à la fréquence $F_{out}$ par un additionneur 5.

Le signal obtenu en sortie de l'additionneur 5 peut être transmis tel quel ou, comme cela est représenté, transposé à nouveau au moyen d'un deuxième multiplieur 6 qui le multiplie avec une porteuse locale de transmission $F_e$ fournie par un générateur local de porteuse de transmission 7 et qui est suivi par un filtre de bande 8. Cette deuxième transposition, qui est facultative, ne sera pas prise en compte dans la suite des explications car les effets de ses dérives et imprécisions se manifestent de manière identique sur le pilote de transposition et sur le signal utile issu de la première transposition, si bien qu'ils n'interviennent pas au niveau de la récupération de la fréquence et la phase du signal relayé par le transpondeur.

Le choix d'une transposition de fréquence infradyne avec sélection de la bande latérale inférieure est un choix arbitraire. On pourrait tout aussi bien choisir une transposition infradyne avec sélection de la bande latérale supérieure ou supradyne avec sélection de la bande latérale inférieure ou supérieure mais il est nécessaire de fixer ce choix pour pouvoir préciser les relations liant la fréquence de la porteuse de transposition du transpondeur à la fréquence de la porteuse de démodulation utilisée localement dans un récepteur exploitant le signal relayé par le transpondeur. De même, l'adoption du signal de l'horloge locale du transpondeur comme pilote de transposition est une question de convenance. La fréquence du pilote de transposition pourrait tout aussi bien être une sur-harmonique ou une sous-harmonique de celle du signal de l'horloge locale du transpondeur, l'important étant que le pilote de transposition soit lié en fréquence et en phase, par une relation de dépendance, avec la porteuse de transposition.

La fréquence de l'horloge locale à quartz du transpondeur a une valeur effective $F_q$ déterminée par un quartz, qui est affectée, par rapport à sa valeur théorique, d'une erreur statique $\Delta_s F_q$ et d'une erreur dynamique $\Delta_d F_q(t)$ :

$$F_{ol} = F_q + \Delta_s F_q + \Delta_d F_q(t)$$

Ces erreurs statique $\Delta_s F_q$ et dynamique $\Delta_d F_q(t)$ se répercutent sur le signal utile transposé, par des translations de fréquence qui font qu'il n'occupe pas exactement la position attendue dans le spectre de fréquence, mais une position voisine non prévisible en réception que seule la poursuite du pilote de transposition permet de repérer.

Pour extraire en réception, le signal d'origine relayé par le transpondeur, il faut soumettre le signal reçu du transpondeur à des transpositions de fréquence inverses de celles pratiquées par le transpondeur. En supposant le cas éventuel de la deuxième transposition de fréquence par une porteuse de transmission réglé préalablement par une opération de transposition inverse obtenue à l'aide d'une porteuse de transmission engendrée localement en réception, sans aucun lien de phase ou de fréquence avec la porteuse d'émission utilisée par le transpondeur, il faut, pour récupérer la fréquence et la phase du signal d'origine, démoduler le signal résultant par une porteuse de démodulation à la fréquence $KF_{ol} - L_1$ obtenue à partir d'un signal d'horloge locale accrochée en fréquence et en phase sur celui du transpondeur.

Pour ce faire, il est connu de pourvoir l'horloge locale du récepteur d'une boucle de poursuite de l'horloge locale du transpondeur accrochée sur le pilote de transposition présent dans le signal reçu provenant du transpondeur. Cependant, il arrive, dans un certain nombre de cas, que le rapport signal à bruit avec lequel est reçu le pilote de transposition est trop faible pour permettre à la boucle de poursuite d'avoir un temps de réaction suffisamment court pour suivre les variations en fréquence de la porteuse de transposition utilisée par le transpondeur. La boucle de poursuite permet encore à l'horloge locale du récepteur de tenir compte de l'erreur statique $\Delta_s F_q$ affectant la fréquence $F_q$ du signal de l'horloge locale du transpondeur mais elle ignore l'erreur dynamique $\Delta_d F_q(t)$.

Le fait que la boucle de poursuite du pilote de transmission de l'horloge locale du récepteur ne corrige pas l'erreur dynamique $\Delta_d F_q(t)$ pouvant affecter le pilote de transposition fait que le récepteur ne prend pas en compte l'étalement du spectre d'énergie du signal reçu provoqué par la modulation parasite de fréquence induite par cette erreur dynamique $\Delta_d F_q(t)$. Il en résulte, pour le récepteur, un affaiblissement apparent du rapport signal à bruit du signal qu'il reçoit du transpondeur, proportionnel à la dilution d'énergie entre la raie centrale et les raies latérales de la modulation parasite de fréquence affectant le signal reçu.

La figure 2 est un diagramme représentant le taux de dilution d'énergie de la raie centrale vers les raies latérales d'un signal modulé en fréquence, en fonction de l'indice de modulation. On constate que ce taux de dilution dépasse 3 dB au-delà d'un indice de modulation de 1,5, ce qui est considérable lorsqu'il se répercute sur le rapport signal à bruit apparent du signal reçu. Or, dans certaines applications, la modulation parasite de fréquence du signal émis par un transpondeur par suite de l'erreur dynamique de fréquence affectant son pilote de transposition peut atteindre une telle valeur d'indice de modulation.

Le cas se rencontre avec des transpondeurs montés sur des projectiles d'artillerie en vue de relayer les signaux des satellites d'un système de positionnement afin de permettre le suivi des trajectoires de ces projectiles depuis une station de contrôle. Dans ce cas en effet, le transpondeur équipant un projectile et donc le quartz de son horloge locale sont soumis, lorsque le projectile décrit sa trajectoire balistique, à des efforts mécaniques périodiques dus au mouvement de rotation sur lui-même imposé au projectile et à son balourd inévitable. Ces efforts mécaniques périodiques influent, par effet pièzo-électrique, sur la fréquence instantanée du quartz entraînant l'apparition d'une erreur dynamique de fréquence se traduisant sur le signal d'horloge locale du transpondeur par une modulation parasite de fréquence. L'indice de modulation de la modulation parasite de fréquence apparaissant au niveau du signal d'horloge du transpondeur est faible mais il se retrouve amplifiée, au niveau de la porteuse de transposition et du signal transposé, par le coefficient multiplicateur en fréquence K et peut alors facilement atteindre une valeur supérieure ou égale à l'unité.

Comme l'énergie électrique disponible à bord d'un projectile est très réduite, la puissance d'émission d'un transpondeur équipant un projectile est nécessairement faible, ce qui implique une portée de réception de son signal déjà réduite qui se trouve encore plus réduite par la présence de la modulation parasite de fréquence.

On propose d'améliorer la sensibilité d'un récepteur exploitant le signal d'un tel transpondeur en tirant parti de la stationnarité de la modulation parasite de fréquence qui affecte son signal. En effet, cette modulation parasite de fréquence est quasiment stationnaire puisqu'elle est provoquée par des efforts périodiques appliqués au quartz de l'horloge locale du transpondeur, dont l'amplitude et la périodicité varient peu puisque déterminées par la vitesse de rotation sur lui-même du projectile et par l'ampleur de son balourd qui évoluent peu ou pas du tout lorsque le projectile décrit sa trajectoire.

La quasi-stationnarité de cette modulation parasite de fréquence permet de l'appréhender de manière assez précise, à partir de son indice de modulation et de la fréquence et de la phase de son signal modulant qui peuvent être déduits du rapport d'énergie et de l'écart en fréquence et en phase existant entre la raie centrale et la première raie latérale du spectre de modulation. Or, s'il est difficile de suivre en temps réel les variations de fréquence du pilote de transposition émis par le transpondeur en raison de la faiblesse du rapport signal à bruit du signal disponible en réception, il est nettement plus facile de mesurer les énergies relatives de la raie centrale et de la première raie latérale du spectre de la modulation parasite de fréquence du pilote de transposition reçu ainsi que les écarts en fréquence et en phase séparant ces raies car ces mesures peuvent être faites sur des durées relativement longues permettant d'intégrer le bruit.

Une fois en possession des caractéristiques de phase et de fréquence du signal modulant et de l'indice de modulation de la modulation parasite de fréquence affectant le pilote de transposition reçu, on synthétise le signal modulant et on utilise sa version synthétisée pour moduler en fréquence la porteuse de démodulation utilisée en réception afin de contrecarrer, au niveau de la démodulation, les effets néfastes de la modulation parasite de fréquence affectant le signal provenant du transpondeur et, par conséquent, d'améliorer le rapport signal à bruit apparent du signal reçu.

La figure 3 donne un exemple d'un dispositif de poursuite d'un signal de transpondeur suivant cette méthode dans le cas où la fréquence du signal modulant, donc l'écàrtement de la raie centrale et des premières raies latérales du spectre du pilote de modulation peut être estimé a priori avec une précision suffisante pour permettre la détermination de deux plages de fréquence de capture séparées pour la raie centrale et une première raie latérale. Ce dispositif est montré, dans le cadre d'un récepteur, associé avec un circuit de démodulation du signal relayé par le transpondeur.

Un transpondeur à horloge locale à quartz monté sur un projectile d'artillerie répond assez bien à ce cas de figure car l'erreur statique du quartz est de l'ordre de quelques hertz de part et d'autre de sa fréquence théorique tandis que la fréquence du signal modulant qui correspond à la vitesse de rotation sur lui-même du projectile est de l'ordre de quelques centaines de hertz et connue avec une précision meilleure que la vingtaine de pourcents.

On distingue dans la figure 3 :

- deux boucles 10 et 20 de poursuite en fréquence et en phase opérant en réception, sur le pilote de transposition émis par le transpondeur, une première boucle 10 de poursuite assurant la capture de la raie centrale du spectre du signal reçu au voisinage de la fréquence théorique du pilote de transposition et une deuxième boucle 20 de poursuite, aidée par la première boucle 10 de poursuite, assurant la capture de la première raie latérale du spectre du signal reçu au voisinage de la fréquence théorique du pilote de transposition et délivrant, à partir des mesures des écarts en fréquence et en phase séparant ladite première raie latérale de ladite raie centrale, la fréquence et la phase du signal modulant à l'origine de la raie centrale et de la première raie latérale capturées par les deux boucles 10 et 20 de poursuites,
- des circuits auxiliaires 31, 32 de mesures des énergies de la raie centrale et de la première raie latérale isolées par les deux premières boucles 10 et 20 de poursuite,
- un circuit 33 de calcul de l'indice de modulation m opérant à partir des signaux fournis par les circuits auxiliaires 31, 32 de mesures d'énergies,
- un générateur de signal d'excursion de fréquence 50 comportant un oscillateur NCO 500 à phase et fréquence réglable synchronisé sur la phase et la fréquence du signal modulant délivrées par la deuxième boucle de poursuite 20 et un amplificateur 501 à gain réglable contrôlé par le circuit 33 de calcul de l'indice de modulation et opérant sur le signal délivré par l'oscillateur NCO 500, et
- un démodulateur 40 à boucle de récupération de porteuse aidé par la première boucle de poursuite 10, et par le circuit 50 générateur d'excursion de fréquence.

Les deux premières boucles de poursuite 10, 20 opèrent sur des échantillons réels (une seule composante) du pilote de transposition fournis par des étages amont du récepteur hébergeant le dispositif de poursuite, étages amonts qui sont supposés déplacer le signal reçu dans une bande de fréquence intermédiaire propice à la numérisation, l'échantillonner, le numériser et en extraire par filtrage la bande de fréquence occupée par le spectre du pilote de transposition. Elles sont de conception classique avec en entrée, un détecteur synchrone représenté par un multiplieur complexe 100, respectivement 200, suivi d'un filtre passe-bas 101, respectivement 201, opérant à l'aide d'une porteuse locale engendrée par oscillateur NCO à phase et fréquence réglables 102, respectivement 202, et une chaîne d'asservissement extrayant du signal de sortie du démodulateur synchrone 100, 101, respectivement 200, 201, le signal de réglage de l'oscillateur NCO 102, respectivement 202. Comme on peut le voir sur la figure 3, la chaîne d'asservissement comporte un discriminateur de phase 103, respectivement 203, suivi d'un filtre de boucle 105, respectivement 205 et d'un ou plusieurs additionneurs 106, respectivement 206, 207.

Le démodulateur synchrone 100, 101, respectivement 200, 201 opère sur des échantillons numériques réels du pilote de transposition, c'est-à-dire n'ayant qu'une seule composante puisque le pilote de transposition est disponible en bande de fréquence intermédiaire, à l'aide des échantillons numériques complexes d'une porteuse locale, c'est-à-dire à deux composantes correspondant à des versions en phase et en quadrature engendrées simultanément par l'oscillateur NCO à phase et fréquence réglables 102, respectivement 202, qui est de type numérique et connu sous la désignation anglo-saxonne de "Numerical Controlled Oscillator". Il délivre des échantillons complexes formés des composantes en phase et en quadrature du signal démodulé qui sont appliqués à la chaîne d'asservissement.

Le discriminateur de phase 103, respectivement 203, placé en tête de la chaîne d'asservissement, calcule l'angle de phase de chaque échantillon complexe du signal démodulé, par exemple à partir de sa tangente tirée du rapport de la composante en quadrature sur la composante en phase, car cet angle de phase constitue l'erreur de phase instantanée affectant la porteuse locale engendrée par l'oscillateur NCO à phase et fréquence réglable 102, respectivement 202.

La chaîne d'asservissement qui vient à la suite assure la poursuite en fréquence et en phase à partir de l'erreur de phase cumulée. Son filtre de boucle 105, respectivement 205, permet d'ajuster son comportement pour faire en sorte qu'elle parvienne le plus rapidement possible à l'équilibre en évitant les erreurs de traînage et les sur-oscillations.

Le ou les circuits additionneurs, 106 respectivement 206, 207, placés en fin de chaîne d'asservissement permettent d'ajouter des consignes au niveau de la commande de l'oscillateur NCO 102, respectivement 202, et de jouer sur la nature du signal engendré par la chaîne d'asservissement.

La première boucle de poursuite 10 a pour fonction de capturer la raie centrale du spectre du pilote de transposition présent dans le signal émis par le transpondeur, raie centrale qui s'écarte de sa valeur théorique $F_q$ connue en réception, de plus ou moins quelques hertz correspondant à l'erreur statique $\Delta_s F_q$. Pour ce faire, elle est dotée d'une plage de capture de quelques hertz ajustée par la largeur de la bande passante du filtre passe-bas 101 de son détecteur synchrone et reçoit, par son circuit additionneur 106, une consigne de réglage initiale de son oscillateur NCO 102 à la fréquence $F_q$.

Du fait de sa consigne de réglage initiale à la fréquence $F_q$, cette première boucle de poursuite 10 tend à capturer, dans le spectre du pilote de transposition, la raie d'énergie la plus proche de la fréquence $F_q$, qui est la raie centrale. Une fois cette capture faite, le filtre passe-bas 101 de son démodulateur synchrone délivre un signal $J_0$ correspondant à cette raie centrale tandis que son oscillateur NCO 102 reçoit une consigne de réglage en phase et en fréquence correspondant à la quantité $F_q + \Delta_s F_q$ et que son filtre de boucle 105 délivre l'erreur de phase et de fréquence constatée par rapport à la valeur théorique $F_q$, donc l'erreur statique $\Delta_s F_q$.

La deuxième boucle de poursuite 20 a pour fonction de capturer une première raie latérale du spectre du pilote de transposition présent dans le signal émis par le transpondeur, première raie latérale qui devrait s'écarter de la raie centrale d'une valeur théorique $\hat{F}_m$, de quelques centaines de hertz, connue en réception, écart correspondant à un signal modulant parasite provenant de l'erreur dynamique $\Delta_d F_q(t)$. Pour ce faire, elle est dotée d'une plage de capture de quelques centaines de hertz ajustée par la largeur de la bande passante du filtre passe-bas 201 de son détecteur synchrone et reçoit, par ses circuits additionneurs 206 et 207, une consigne de réglage initiale de son oscillateur NCO 102 à la fréquence $\hat{F}_m + F_q + \Delta F_q$.

Du fait de sa consigne de réglage initiale à la fréquence $\hat{F}_m + F_q + \Delta F_q$, cette deuxième boucle de poursuite 20 tend à capturer, dans le spectre du pilote de transposition reçu, la raie d'énergie la plus proche de la fréquence $\hat{F}_m + F_q + \Delta F_q$ qui devrait être la première raie latérale. La capture de la raie centrale de plus forte énergie est évitée par le fait qu'elle est initialement éloignée de la plage de capture. Une fois que la deuxième boucle de poursuite 20 a capturé la première raie latérale, le filtre passe-bas 201 de son démodulateur synchrone délivre un signal $J_1$ correspondant à cette première raie latérale tandis que son oscillateur NCO 102 reçoit une consigne de réglage en phase et en fréquence correspondant à la quantité $F_m + F_q + \Delta F_q$ et que son filtre de boucle 105 délivre l'erreur de phase et de fréquence $\Delta F_m$ constatée sur le signal modulant parasite par rapport à sa valeur théorique $\hat{F}_m$, le signal modulant parasite effectif $F_m = \hat{F}_m + \Delta F_m$ étant disponible en sortie du circuit additionneur 207.

Pour la détermination de la valeur de l'indice de modulation de la modulation parasite de fréquence affectant le pilote de transposition reçu, on fait appel à la loi qui le relie au rapport entre les énergies de la raie centrale et de la première raie latérale du spectre de modulation. A cette fin, le circuit auxiliaire 31 de mesure d'énergie calcule la valeur moyenne des modules des échantillons du signal correspondant à la raie centrale de modulation, qui sont disponibles en sortie du démodulateur synchrone 100, 101 de la première boucle de poursuite 10. Le circuit auxiliaire 32 de mesure d'énergie calcule la valeur moyenne des modules des échantillons du signal correspondant à la première raie latérale du spectre de modulation, qui sont disponibles en sortie du démodulateur synchrone 200, 201 de la deuxième boucle de poursuite 20. Puis le circuit 33 de calcul d'indice de modulation divise la valeur fournie par le circuit auxiliaire 32 de mesure d'énergie par celle fournie par le circuit auxiliaire 31 de mesure d'énergie et utilise le résultat obtenu pour adresser une table mémorisée renfermant la loi de variation de l'indice de modulation en fonction du rapport d'énergie existant entre la première raie latérale de modulation et la raie centrale d'un spectre de modulation de fréquence et tirer de cette table l'indice de modulation m de la modulation parasite de fréquence affectant le pilote de transposition reçu.

Le générateur de signal d'excursion de fréquence 50 synthétise le signal d'excursion de fréquence affectant le pilote de transposition reçu alors que la détection directe de celui-ci n'est pas à la portée d'une boucle de poursuite en raison d'un trop faible rapport signal à bruit. Pour ce faire, son oscillateur NCO 500 à phase et fréquence réglable est réglé au moyen du signal $F_m$ qui est disponible en sortie du circuit additionneur 206 de la chaîne d'asservissement de la deuxième boucle de poursuite 20 et qui correspond aux écarts de phase et de fréquence entre la raie centrale et la première raie latérale du spectre de modulation du pilote de transposition reçu, afin de synthétiser le signal modulant avec une amplitude unité. Puis son amplificateur 501 à gain réglable reprend le signal modulant synthétisé avec une amplitude unité pour lui donner une amplitude correspondant à l'indice de modulation m.

Le signal de sortie du générateur de signal d'excursion de fréquence 50 est alors additionné, par un circuit additionneur 34 à l'erreur statique en fréquence et en phase $\Delta F_q$ mesurée sur le pilote de transposition reçu par la première boucle de poursuite 10 afin d'obtenir une estimation à chaque instant de l'erreur globale, en statique et en dynamique, affectant le pilote de transposition du transpondeur.

Le démodulateur 40 a pour fonction de démoduler le signal relayé par le transpondeur supposé lui parvenir en fréquence intermédiaire sous forme d'échantillons réels numérisés. C'est un démodulateur classique de signal de récepteur d'un système de positionnement par satellites de type GPS. Son principe de fonctionnement ne sera pas détaillé car il est bien connu de l'homme du métier et largement décrit dans la littérature, notamment, dans le chapitre "Satellite Signal Acquisition and Tracking" du livre "Understanding GPS Principles and Application de Elliot D. KAPLAN paru aux éditions Artech House, inc. 1996. Il suffit de savoir pour la compréhension de l'usage, au sein d'un récepteur GPS, du dispositif de poursuite du signal d'un transpondeur qui vient d'être décrit, qu'un démodulateur de récepteur GPS comporte la même architecture générale que les deux boucles de poursuite 10 et 20 décrite précédemment, avec en entrée un démodulateur synchrone délivrant un signal démodulé $S_d$ et pouvant être représenté par un multiplieur 400 suivi par un filtre passe-bas 401, Ce démodulateur synchrone nécessite, pour fonctionner une porteuse locale de démodulation synchronisée en fréquence et en phase sur celle utilisée à la modulation, qui est engendrée à l'aide d'un oscillateur NCO 402 à réglage de phase et de fréquence ajusté au moyen d'une chaîne d'asservissement détectant les erreurs de phases faites par rapport à une raie d'énergie extraite des échantillons du signal démodulé par un traitement non linéaire (circuit 403), intégrant ces erreurs de phase pour permettre une poursuite en fréquence sur plusieurs tours de phase et en tirant un signal de réglage de l'oscillateur NCO 402 (filtre de boucle 405).

Avec les hypothèses faites initialement sur l'architecture du transpondeur et sans tenir compte du passage en fréquence intermédiaire ni d'une éventuelle modulation par une porteuse de transmission au niveau du transpondeur, le signal en entrée du démodulateur se présente dans une bande de fréquence centrée sur une fréquence $F_{out}$ :

$$F_{out} = K.F_{ol} - L_1$$

ou, en exprimant la fréquence de l'horloge locale du transpondeur en fonction de celle $F_q$ du quartz qui en est à l'origine et des erreurs statique $\Delta_s F_q$ et dynamique $\Delta_d F_q(t)$ affectant la fréquence du quartz :

$$F_{out} = K\left(F_q + \Delta_s F_q + \Delta_d F_q(t)\right) - L_1$$

ou encore, compte tenu de l'assimilation de l'erreur dynamique $\Delta_d F_q(t)$ à une modulation de fréquence stationnaire :

$$\Delta_d F_q(t) = m\sin 2\pi F_{mt}$$

$$F_{out} = K\left(F_q + \Delta_s F_q + m\sin 2\pi F_m t\right) - L_1$$

que l'on peut réarranger sous la forme :

$$F_{out} = \left(KF_q - L_1\right) + K\Delta_s F_q + Km\sin 2\pi F_m t$$

Le premier terme est la valeur théorique de la fréquence de la porteuse de démodulation. Il est habituel de l'utiliser pour le réglage initiale de l'oscillateur NCO 402 à réglage de phase et de fréquence engendrant la porteuse locale, ce que l'on représente par l'ajout au signal de la chaîne d'asservissement contrôlant le réglage de l'oscillateur NCO 402, d'une consigne de fréquence $KF_q$ -$L_1$ au moyen d'un circuit additionneur 407 intercalé en sortie de chaîne d'asservissement.

Le deuxième terme est l'erreur statique de fréquence et de phase faite par le transpondeur sur la porteuse de transposition qu'il utilise. Il est dans un rapport K avec l'erreur statique affectant le pilote de transposition. Sa prise en compte est la justification première de la présence du pilote de transposition dans le signal du transpondeur. Elle se fait usuellement par ajout au signal de la chaîne d'asservissement contrôlant le réglage de l'oscillateur NCO 402, au moyen d'un circuit additionneur, ici le circuit 406, d'une consigne $K\Delta_s F_q$ obtenue à partir de l'erreur statique de fréquence $\Delta_s F_q$ tirée de la première boucle de poursuite 10 et mise à l'échelle K par un multiplieur ici le circuit 408.

Le troisième terme est l'erreur dynamique de fréquence et de phase faite par le transpondeur sur la porteuse de transposition qu'il utilise. Il est dans un rapport K avec l'erreur dynamique affectant le pilote de transposition. Sa prise en compte, qui ne se faisait pas jusqu'à présent, est faite au moyen d'un circuit additionneur 34 qui ajoute le signal du générateur du signal d'excursion de fréquence 50 à l'erreur statique de fréquence $\Delta_s F_q$ tirée de la première boucle de poursuite 10 avant sa mise à l'échelle K par le multiplieur 408 et son ajout par le circuit additionneur 406, au signal de sortie de la chaîne d'asservissement contrôlant le réglage de l'oscillateur NCO 402.

En variante, il est possible d'intercaler, devant la deuxième boucle de poursuite 20, un circuit 60 de suppression de la raie centrale du spectre de modulation du pilote de transposition. L'élimination ou à tout le moins la réduction de l'énergie de cette raie entrée de la deuxième boucle de poursuite 20 facilite le fonctionnement de cette deuxième boucle et évite les problèmes d'attraction posés à cette deuxième boucle de poursuite 20, par la présence dans le voisinage proche de la raie sur laquelle elle est accrochée, d'une raie beaucoup plus énergétique. La présence de ce circuit 60 de suppression de raie permet une augmentation de l'imprécision de l'estimation de la fréquence du signal modulant qui peut aller jusqu'à la suppression de l'ajout d'une telle consigne au signal de la chaîne d'asservissement réglant l'oscillateur NCO 202 de la deuxième boucle de poursuite 20 et/ou une diminution du temps de capture de la deuxième boucle de poursuite 20.

Le circuit 60 de suppression de raie centrale peut être, comme représenté sur la figure 3, un filtre à encoche centré sur la plage de présence possible de cette raie qui dépend des tolérances du quartz de l'horloge locale du transpondeur ou, comme représenté à la figure 4, un circuit soustracteur 602 alimenté par un générateur de raie centrale utilisant le signal de l'oscillateur NCO 102 de la première boucle de poursuite 10 ajusté en amplitude au moyen d'un amplificateur à gain réglable 601 ayant une consigne d'amplitude délivrée par le circuit auxiliaire 31 de mesure d'énergie de la raie fondementale.

La figure 4 donne un exemple de dispositif de poursuite d'un signal de transpondeur qui se différencie de celui représenté à la figure 3 par la présence d'un circuit 60 de suppression de raie centrale à base d'un générateur de raie et par la non insertion de consigne de fréquence de signal modulant au niveau de la sortie de la chaîne d'asservissement fournissant le signal de réglage de l'oscillateur NCO 202 de la deuxième boucle de poursuite 20.

Pour faciliter la compréhension, les exemples de dispositif de poursuite d'un signal de transpondeur ont été illustrés par des schémas où les différentes fonctions remplies ont été représentées sous forme de blocs séparés. Dans la pratique, les signaux traités étant souvent numérisés, les différentes fonctions sont des traitements numériques réalisés au moyen d'un ou plusieurs processeurs de signal éventuellement spécialisés, qui effectuent leurs tâches en parallèle ou en temps partagé, selon un ordre adapté aux techniques numériques sans nécessairement respecter le découpage adopté pour la description.

**Revendications**

1. Procédé de poursuite, en réception, du signal d'un transpondeur à transposition de fréquence et à signal incorporant un pilote de transposition lié en fréquence et en phase, par une relation de dépendance, à la porteuse de transposition qu'il utilise, lorsque la dite porteuse de transposition est sujette non seulement à un écart statique par rapport à sa fréquence théorique mais aussi à des fluctuations dynamiques assimilables à une modulation de fréquence, ledit procédé étant **caractérisé en ce qu'**il consiste à :

   - mesurer en réception, la fréquence, la phase et l'énergie ($F_q+\Delta F_q$, $J_0$) de la raie centrale du spectre de modulation du pilote de transposition,
   - mesurer en réception, la fréquence, la phase et l'énergie ($F_q+\Delta F_q$,$+F_m$, $J_1$) de la première raie latérale du spectre de modulation du pilote de transposition,
   - déduire la fréquence et la phase ($F_m$) du signal modulant, des différences constatées entre les fréquences et les phases mesurées entre la raie centrale et la première raie latérale du pilote de transposition reçu,
   - déduire l'indice de modulation (m) de la modulation parasite de fréquence affectant le pilote de transposition reçu, du rapport entre les énergies de sa raie centrale ($J_0$) et de sa première raie latérale ($J_1$),
- engendrer un premier signal ayant la fréquence et la phase ($F_m$) du signal modulant obtenues au cours d'une étape précédente, et une amplitude correspondant à l'indice de modulation obtenu au cours d'une étape précédente,
- déduire du premier signal obtenu un deuxième signal, par application de la relation de dépendance liant en fréquence et en phase le pilote de transposition à la porteuse de transposition,
- engendrer une porteuse locale de démodulation modulée en fréquence par le deuxième signal obtenu, et
- utiliser la porteuse locale modulée en fréquence ainsi obtenue pour la démodulation du signal du transpondeur.

2. Dispositif de mise en oeuvre du procédé selon la revendication 1, **caractérisé en ce qu'**il comporte :

- une première boucle de poursuite (10), en fréquence et en phase, de la raie centrale ($J_0$) du spectre de modulation du pilote de transposition du transpondeur opérant sur le pilote de transposition reçu, isolant ladite raie centrale et délivrant l'erreur statique ($\Delta_s F_q$) en fréquence et en phase de la raie centrale par rapport aux valeurs théoriques
- un premier circuit auxiliaire (31) de mesure d'énergie opérant sur la raie centrale ($J_0$) capturée par la première boucle de poursuite (10),
- une deuxième boucle de poursuite (20), en fréquence et en phase, de la première raie latérale ($J_1$) du spectre de modulation du pilote de transposition opérant sur le pilote de transposition reçu, isolant ladite première raie latérale ($J_1$) et délivrant la fréquence et la phase du signal modulant,
- un deuxième circuit auxiliaire (32) de mesure d'énergie opérant sur la première raie latérale ($J_1$) capturée par la deuxième boucle de poursuite (20),
- un circuit (33) de calcul de l'indice de modulation (m) opérant à partir des signaux fournis par les circuits auxiliaires (31, 32) de mesures d'énergies,
- un générateur de signal d'excursion de fréquence (50) comportant un oscillateur (NCO 500) à phase et fréquence réglables synchronisé sur la phase et la fréquence du signal modulant délivrées par la deuxième boucle de poursuite (20) et un amplificateur (501) à gain réglable contrôlé par le circuit (33) de calcul de l'indice de modulation et opérant sur le signal délivré par l'oscillateur (NCO 500), et
- un démodulateur (40) à boucle de récupération de porteuse aidé par la première boucle de poursuite (10), et par le générateur d'excursion de fréquence (50).

3. Dispositif selon la revendication 2, **caractérisé en ce que** la deuxième boucle de poursuite (20) est aidée par la première boucle de poursuite (10).

4. Dispositif selon la revendication 2, **caractérisé en ce que** le circuit de calcul d'indice de modulation (33) comporte des moyens diviseurs divisant la valeur d'énergie fournie par le circuit auxiliaire (32) de mesure d'énergie opérant sur la raie isolée par la deuxième boucle de poursuite (20) par celle fournie par le circuit auxiliaire (31) de mesure d'énergie opérant sur la raie isolée par la première boucle de poursuite (10) et des moyens d'adressage utilisant le résultat obtenu pour adresser une table renfermant une loi de variation de l'indice de modulation en fonction du rapport d'énergie existant entre la première raie latérale de modulation et la raie centrale d'un spectre de modulation de fréquence et en tirer la valeur de l'indice de modulation m de la modulation parasite de fréquence affectant le pilote de transposition reçu

5. Dispositif selon la revendication 2, **caractérisé en ce qu'**un dispositif (60) de suppression de raie centrale est interposé devant l'entrée de la deuxième boucle de poursuite (20).

6. Dispositif selon la revendication 5, **caractérisé en ce que** le dispositif (60) de suppression de raie centrale est un filtre à encoche arrêtant la bande de fréquence dans laquelle la raie centrale est susceptible de se trouver.

7. Dispositif selon la revendication 5, **caractérisé en ce que** le dispositif (60) de suppression de raie centrale comporte un circuit soustracteur (602) intercalé en entrée de la deuxième boucle de poursuite (20) et un synthétiseur de signal fournissant le signal soustrait, pourvu d'un oscillateur (NCO 102) à phase et fréquence réglables synchronisé sur la phase et la fréquence de la raie centrale du pilote de transposition délivrées par la première boucle de poursuite (10) et un amplificateur (601) à gain réglable contrôlé par le circuit auxiliaire (31) de mesure d'énergie opérant sur la raie isolée par la première boucle de poursuite (10).

**Claims**

1.  Method for the tracking, at reception, of the signal from a frequency-transposition transponder whose signal incorporates a transposition pilot linked, by a frequency and phase dependency relation, to the transposition carrier that it uses, when said transposition carrier is subject not only to a static shift with respect to its theoretical frequency but also to dynamic fluctuations that can be likened to a frequency modulation, said method being **characterized in that** it consists in:

    - measuring, at reception, the frequency, the phase and the power ($F_q + \Delta F_q$, $J_0$) of the central band of the modulation spectrum of the transposition pilot signal,
    - measuring, at reception, the frequency, the phase and the power ($F_q + \Delta F_q + F_m$, $J_1$) of the first sideband of the modulation spectrum of the transposition pilot signal,
    - deducing the frequency and phase ($F_m$) of the modulating signal, from the observed differences in the measured frequencies and phases between the central band and first sideband of the received transposition pilot signal,
    - deducing the modulation index (m) of the parasitic frequency modulation affecting the received transposition pilot signal, from the ratio of the power ($J_0$) of its central band to the power ($J_1$) of its first sideband,
    - generating a first signal having the frequency and phase ($F_m$) of the modulating signal, which are obtained during a previous step, and an amplitude corresponding to the modulation index obtained during a previous step,
    - deducing from the first signal obtained a second signal, by applying the frequency and phase dependency relation linking the transposition pilot signal to the transposition carrier,
    - generating a local demodulation carrier that is frequency-modulated by the second signal obtained and
    - using the local frequency-modulated carrier thus obtained for the demodulation of the transponder signal.

2.  Device for implementing the method according to Claim 1, **characterized in that** it comprises:

    - a first loop (10) for the tracking, in frequency and in phase, of the central band ($J_0$) of the modulation spectrum of the transponder transposition pilot signal operating on the received transposition pilot signal, isolating said central band and delivering the static frequency and phase error ($\Delta_s F_q$) for the central band relative to the theoretical values,
    - a first auxiliary power measurement circuit (31) operating on the central band ($J_0$) captured by the first tracking loop (10),
    - a second loop (20) for the tracking, in frequency and in phase, of the first sideband ($J_1$) of the modulation spectrum of the transposition pilot signal operating on the received transposition pilot signal, isolating said first sideband ($J_1$) and delivering the frequency and phase of the modulating signal,
    - a second auxiliary power measurement circuit (32) operating on the first sideband ($J_1$) captured by the second tracking loop (20),
    - a circuit (33) for calculating the modulation index (m) operating from the signals supplied by the auxiliary power measurement circuits (31, 32),
    - a frequency-excursion signal generator (50) comprising a variable-phase/variable-frequency oscillator (NCO 500) synchronized to the phase and frequency of the modulating signal that are delivered by the second tracking loop (20) and a variable gain amplifier (501) controlled by the modulation index calculator circuit (33) and operating on the signal delivered by the oscillator (NCO 500) and
    - a demodulator (40) with a carrier recovery loop assisted by the first tracking loop (10) and by the frequency-excursion generator (50).

3.  Device according to Claim 2, **characterized in that** the second tracking loop (20) is assisted by the first tracking loop (10).

4.  Device according to Claim 2, **characterized in that** the modulation index calculator circuit (33) comprises division means for dividing the power value supplied by the auxiliary power measurement circuit (32) operating on the line isolated by the second tracking loop (20) by that supplied by the auxiliary power measurement circuit (31) operating on the line isolated by the first tracking loop (10) and addressing means using the result obtained to address a table containing a rule for the variation of the modulation index as a function of the power ratio existing between the first modulation sideband and the central band of a frequency-modulation spectrum and to extract from this the modulation index m of the parasitic frequency modulation affecting the received transposition pilot signal.

5.  Device according to Claim 2, **characterized in that** a device (60) for suppressing the central band is interposed just before the input of the second tracking loop (20).

6. Device according to Claim 5, **characterized in that** the device (60) for suppressing the central band is a notch filter blocking the frequency band within which the central band is likely to be found.

7. Device according to Claim 5, **characterized in that** the device (60) for suppressing the central band comprises a subtraction circuit (602) inserted at the input of the second tracking loop (20) and a signal synthesizer supplying the subtracted signal, equipped with a variable-phase/variable-frequency oscillator (NCO 102) synchronized to the phase and frequency of the central band of the transposition pilot signal that are delivered by the first tracking loop (10) and a variable gain amplifier (601) controlled by the auxiliary power measurement circuit (31) operating on the line isolated by the first tracking loop (10).

**Patentansprüche**

1. Verfahren zur Verfolgung, auf der Empfangsseite, des Signals eines Transponders mit Frequenztransposition und mit Signal, in den ein Transpositionspilot eingegliedert ist, der in Frequenz und Phase über eine Abhängigkeitsverbindung mit der Transpositions-Trägerwelle verbunden ist, die er verwendet, wenn die Transpositions-Trägerwelle nicht nur einer statischen Abweichung bezüglich ihrer theoretischen Frequenz, sondern auch dynamischen Schwankungen unterworfen ist, die einer Frequenzmodulation gleichen, wobei das Verfahren **dadurch gekennzeichnet ist, dass** es darin besteht:

   - auf der Empfangsseite die Frequenz, die Phase und die Energie ($F_q+\Delta F_q$, $J_0$) der Mittellinie des Modulationsspektrums des Transpositionspilots zu messen,
   - auf der Empfangsseite die Frequenz, die Phase und die Energie ($F_q+\Delta F_q,+F_m$, $J_1$) der ersten Seitenlinie des Modulationsspektrums des Transpositionspilots zu messen,
   - die Frequenz und die Phase ($F_m$) des modulierenden Signals aus den festgestellten Differenzen zwischen den Frequenzen und Phasen abzuleiten, die zwischen der Mittellinie und der ersten Seitenlinie des empfangenen Transpositionspilots gemessen werden,
   - den Modulationsindex (m) der Frequenz-Störmodulation, die den empfangenen Transpositionspilot beeinträchtigt, von dem Verhältnis zwischen den Energien seiner Mittellinie ($J_0$) und seiner ersten Seitenlinie ($J_1$) abzuleiten,
   - ein erstes Signal zu erzeugen, das die Frequenz und die Phase ($F_m$) des modulierenden Signals hat, die während eines vorhergehenden Schritts erhalten wurden, und eine Amplitude hat, die dem während eines vorhergehenden Schritts erhaltenen Modulationsindex entspricht,
   - aus dem ersten erhaltenen Signal ein zweites Signal abzuleiten, durch Anwenden der Abhängigkeitsbeziehung, die den Transpositionspilot in Frequenz und Phase mit der Transpositions-Trägerwelle verbindet,
   - eine lokale Demodulations-Trägerwelle zu erzeugen, die vom zweiten erhaltenen Signal frequenzmoduliert wird, und
   - die so erhaltene lokale frequenzmodulierte Trägerwelle zur Demodulation des Signals des Transponders zu verwenden.

2. Vorrichtung zur Anwendung des Verfahrens nach Anspruch 1, **dadurch gekennzeichnet, dass** sie aufweist:

   - eine erste Verfolgungsschleife (10), in Frequenz und Phase, der Mittellinie ($J_0$) des Modulationsspektrums des Transpositionspilots des Transponders, die am empfangenen Transpositionspilot wirkt, die Mittellinie isoliert und den statischen Fehler ($\Delta_s F_q$) in Frequenz und Phase der Mittellinie bezüglich der theoretischen Werte liefert,
   - eine erste Hilfsschaltung (31) zur Energiemessung, die an der Mittellinie ($J_0$) wirkt, die von der ersten Verfolgungsschleife (10) aufgefangen wird,
   - eine zweite Verfolgungsschleife (20), in Frequenz und Phase, der ersten Seitenlinie ($J_1$) des Modulationsspektrums des Transpositionspilots, die am empfangenen Transpositionspilot wirkt, die erste Seitenlinie ($J_1$) isoliert und die Frequenz und Phase des modulierenden Signals liefert,
   - eine zweite Hilfsschaltung (32) zur Energiemessung, die an der ersten Seitenlinie ($J_1$) wirkt, die von der zweiten Verfolgungsschleife (20) aufgefangen wird,
   - eine Schaltung (33) zur Berechnung des Modulationsindex (m), die ausgehend von den Signalen wirkt, die von den Hilfsschaltungen (31, 32) zur Energiemessung geliefert werden,
   - einen Frequenzhubsignal-Generator (50), der einen Oszillator (NCO 500) mit einstellbarer Phase und Frequenz, der auf die Phase und die Frequenz des modulierenden Signals synchronisiert ist, die von der Verfolgungsschleife (20) geliefert werden, und einen Verstärker (501) mit einstellbarer Verstärkung aufweist, der von der Schaltung (33) zur Berechnung des Modulationsindex gesteuert wird und an dem Signal wirkt, das vom Oszillator (NCO 500) geliefert wird, und
- einen Demodulator (40) mit Trägerwellen-Wiedergewinnungsschleife, unterstützt von der ersten Verfolgungsschleife (10) und vom Frequenzhub-Generator (50).

3. Vorrichtung nach Anspruch 2, **dadurch gekennzeichnet, dass** die zweite Verfolgungsschleife (20) von der ersten Verfolgungsschleife (10) unterstützt wird.

4. Vorrichtung nach Anspruch 2, **dadurch gekennzeichnet, dass** die Schaltung zur Berechnung des Modulationsindex (33) Teilermittel, die den von der Hilfsschaltung (32) zur Energiemessung, die auf die von der zweiten Verfolgungsschleife (20) isolierte Linie wirkt, gelieferten Energiewert durch denjenigen teilt, der von der Hilfsschaltung (31) zur Energiemessung geliefert wird, die auf die von der ersten Verfolgungsschleife (10) isolierte Linie wirkt, und Ansteuerungsmittel aufweist, die das erhaltene Ergebnis verwenden, um eine Tabelle anzusteuern, die ein Änderungsgesetz des Modulationsindex in Abhängigkeit von dem Energieverhältnis enthält, das zwischen der ersten Modulations-Seitenlinie und der Mittellinie eines Frequenzmodulationsspektrums existiert, und daraus den Wert des Modulationsindex m der Frequenz-Störmodulation zu ziehen, die den empfangenen Transpositionspilot beeinträchtigt.

5. Vorrichtung nach Anspruch 2, **dadurch gekennzeichnet, dass** eine Vorrichtung (60) zur Mittellinie-Unterdrückung vor den Eingang der zweiten Verfolgungsschleife (20) eingefügt ist.

6. Vorrichtung nach Anspruch 5, **dadurch gekennzeichnet, dass** die Vorrichtung (60) zur Mittellinie-Unterdrückung ein Kerbfilter ist, das das Frequenzband anhält, in dem sich die Mittellinie befinden kann.

7. Vorrichtung nach Anspruch 5, **dadurch gekennzeichnet, dass** die Vorrichtung (60) zur Mittellinie-Unterdrückung eine Subtrahierschaltung (602), die am Eingang der zweiten Verfolgungsschleife (20) eingefügt ist, und einen das subtrahierte Signal liefernden Signalsynthetisierer aufweist, der mit einem Oszillator (NOC 102) mit einstellbarer Phase und Frequenz versehen ist, der auf die Phase und die Frequenz der Mittellinie des Transpositionspilots synchronisiert ist, die von der ersten Verfolgungsschleife (10) geliefert werden, und einen Verstärker (601) mit einstellbarer Verstärkung aufweist, der von der Hilfsschaltung (31) zur Energiemessung gesteuert wird, die auf die von der ersten Verfolgungsschleife (10) isolierte Linie wirkt.

**FIG. 1**

**FIG. 2**

**FIG. 3**

**FIG. 4**

**RÉFÉRENCES CITÉES DANS LA DESCRIPTION**

**Documents brevets cités dans la description**

- FR 2815792